# FASCICULE DE BREVET EUROPEEN

(11) **EP 2 704 901 B1**
(45) Date de publication et mention de la délivrance du brevet: **15.07.2015**
(21) Numéro de dépôt: 12718203.8
(22) Date de dépôt: 02.05.2012
(51) Int. Cl.: B32B 3/28, B64C 1/18

(54) **PANNEAU COMPOSITE AUTO-RAIDI, NOTAMMENT POUR PLANCHER D'AÉRONEF, ET PROCÉDÉ DE FABRICATION D'UN TEL PANNEAU**
SELBSTVERSTEIFENDE VERBUNDPLATTE, INSBESONDERE FÜR EINEN FLUGZEUGBODEN, SOWIE VERFAHREN ZUR HERSTELLUNG EINER SOLCHEN PLATTE
SELF-STIFFENED COMPOSITE PANEL, PARTICULARLY FOR AN AIRCRAFT FLOOR, AND METHOD FOR MANUFACTURING SUCH A PANEL

(30) Priorité: 02.05.2011 FR 1101351
(43) Date de publication de la demande: 12.03.2014
(73) Titulaire: Daher Aerospace, 41400 Saint Julien De Chedon (FR)
(72) Inventeur: KURTZ, Didier, F-44210 Pornic (FR); BESNARD, Marion, F-41400 Saint Julien de Chédéon (FR); MARTERERE, Jacques, F-92380 Garches (FR)
(74) Mandataire: Hamann, Jean-Christophe
(86) Numéro de dépôt international: PCT/EP2012/057987
(87) Numéro de publication internationale: WO 2012/150240

(56) Documents cités:
- WO-A1-2008/157075
- GB-A- 1 582 539
- US-A1- 2008 210 820
- US-B2- 7 581 366
- VELECELA ET AL: "Crushing energy absorption of GFRP sandwich panels and corresponding monolithic laminates", COMPOSITES PART A: APPLIED SCIENCE AND MANUFACTURING, ELSEVIER SCIENCE PUBLISHERS B.V., AMSTERDAM, NL, vol. 38, no. 4, 17 janvier 2007 (2007-01-17), pages 1149-1158, XP005920432, ISSN: 1359-835X, DOI: 10.1016/J.COMPOSITESA.2006.06.002

## Description

L'invention concerne un panneau composite auto-raidi destiné notamment à la constitution d'un plancher, plus particulièrement, mais non exclusivement, pour un plancher d'aéronef. Le panneau objet de l'invention permet avantageusement d'alléger le plancher le mettant en oeuvre en regard des solutions connues de l'art antérieur.

Selon l'art antérieur, un plancher, par exemple le plancher d'un aéronef, est constitué d'une structure de support et d'un sol. La structure de support est constituée de poutres et le sol de plaques ou de lames fixées à ces poutres de sorte à créer une surface sensiblement plane. Par exemple, dans le cas d'un aéronef, la structure de support est constituée de poutres disposées transversalement, ou traverses, liés au fuselage dudit aéronef et constituant un solivage. Des rails longitudinaux sont fixés sur ces traverses et comprennent une interface de fixation pour y connecter les éléments mobiliers compris dans le fuselage, notamment les sièges passagers et les monuments ou meubles systèmes. Les rails comprennent également une interface de pose qui permet de poser des plaques de hourdis entre lesdits rails afin de constituer le sol. Selon d'autres principes constructifs la structure de support est constituée d'une grille comprenant des poutres s'étendant dans une direction transversale ou longitudinale et d'autres poutres montées en étrésillons entre celles-ci, de sorte à constituer une grille. Les plaques de hourdis sont alors posées sur la grille et fixées sur les poutres. Selon un mode de réalisation répandu dans le domaine aéronautique ces plaques de hourdis, ou panneaux de plancher, sont constituées d'un sandwich comprenant une structure en nid d'abeilles prise entre deux plaques, ou peaux. De tels panneaux de planchers sont par exemple décrits dans le document US-B-7 581 366. Lesdits panneaux de plancher drainent les efforts appliqués au plancher vers la structure du fuselage, en passant par la structure de support. Ces efforts sont constitués par des charges : passagers en déplacement, matériels mobiles tels que des cantines dans un avion passager, charges roulantes ou engin de manutention dans un cargo, mais aussi par la pressurisation de la cabine.

Les panneaux de planchers sandwich avec une âme en nid d'abeille présentent une rigidité exceptionnelle en compression et en flexion. Toutefois, cette rigidité en flexion est essentiellement le résultat de l'éloignement des peaux par l'épaisseur de l'âme en nid d'abeilles laquelle âme ne participe que modestement à la résistance en flexion. Ainsi ces panneaux sont particulièrement légers, la rigidité en flexion étant atteinte par de faibles épaisseurs de peau. En contrepartie ces peaux, si elles sont constituées d'un matériau composite à matrice organique et renfort fibreux, ont une résistance au matage très réduite, notamment au niveau des fixations des panneaux de plancher, avec la structure de support. Ceci oblige à des aménagements particuliers, couramment dénommés par le terme anglo saxon de « *hard points* » ou points durs, qui consistent, notamment, au remplissage de résine des alvéoles de l'âme aux points de fixation du panneau sur les rails. Ces points durs créent des discontinuités dans l'écoulement du flux d'efforts vers la structure du fuselage et ajoutent de la masse. De manière similaire, la résistance locale au poinçonnement d'un tel panneau de plancher n'est pas atteinte par l'épaisseur de peau qui serait juste nécessaire pour reprendre les sollicitations de flexion. Finalement, la résistance mécanique de ces panneaux est fortement influencée par la qualité du couplage mécanique entre les deux peaux, laquelle dépend de la qualité d'adhésion entre lesdites peaux et l'âme, les sollicitations de flexion étant transmises d'une peau à l'autre par des sollicitations de cisaillement de l'interface entre la peau et l'âme. La qualité d'adhésion requise est difficile à obtenir compte tenu de la surface de contact très réduite entre les bords des alvéoles de l'âme et les peaux. Un soin très particulier doit donc être apporté sur la préparation de l'âme et des peaux, notamment en termes de planéité des interface, et sur les conditions de collage. Cette exigence relative à la qualité de fabrication, pour atteindre les pleines performances du panneau sandwich, génère des coûts de fabrication élevés ou conduit à des sur-dimensionnements affectant défavorablement la masse du plancher.

Le document WO 2008/157075 décrit un panneau structural composite destiné notamment à la réalisation d'un plancher d'aéronef, lequel panneau résulte d'un assemblage de raidisseurs sous la forme de profilés, enlacés par drapage, puis co-cuits avec une peau entourant ainsi les raidisseurs. La réalisation d'un tel panneau est complexe et se justifie essentiellement pour des panneaux de plancher intégraux, où un seul panneau couvre la quasi totalité du sol de l'aéronef. Cette solution technique n'est par conséquent avantageuse que pour les aéronefs de petite dimension.

L'invention vise à résoudre les inconvénients de l'art antérieur et propose un panneau, notamment pour un plancher d'aéronef, lequel panneau comprend :
a. une première plaque constituée d'un matériau composite renforcé par des fibres continues ;
b. une feuille ondulée constituée d'un matériau composite renforcé par des fibres continues, liée à une face, dite inférieure, de la première plaque ;
c. un moyen de renfort local lié à la feuille ondulée.

Ainsi, la feuille ondulée et la plaque coopèrent pour conférer au panneau la rigidité en flexion, la plaque étant d'épaisseur suffisante pour résister au poinçonnement et le moyen de renfort assure localement la résistance au matage notamment dans les zones de fixation. Le couplage mécanique entre la plaque et la feuille ondulée est obtenue par de larges surfaces de contact, et le moyen de renfort coopère avec cette interface pour assurer la répartition des sollicitations entre la plaque et la feuille ondulée.

L'invention peut être mise en oeuvre selon les modes de réalisation avantageux, exposés ci-après, lesquels peuvent être considérés individuellement ou selon toute combinaison techniquement opérante.

Selon un premier mode de réalisation du panneau objet de l'invention, le moyen de renfort local est constitué d'un insert placé dans l'espace compris entre la face inférieure de la première plaque et les parois internes d'un relief de la feuille ondulée. Ainsi, lesdits inserts ne sont placés qu'aux emplacements où ils sont nécessaires, notamment aux points de fixation du panneau avec la structure de support. La feuille ondulée peut couvrir l'intégralité de la surface de la plaque.

Selon un deuxième mode de réalisation du panneau objet de l'invention, le moyen de renfort local comprend une plaque constituée d'un matériau composite renforcé par des fibres continues. Selon ce mode de réalisation, la partie de la feuille ondulée comprenant des ondulations ne peut pas couvrir la zone couverte par la plaque de renfort. En revanche cette même plaque de renfort assure un couplage mécanique sur une plus large surface et un meilleur transfert des charges entre la plaque et la feuille ondulée.

Ces deux modes de réalisation peuvent être combinés sur un même panneau.

Selon un mode de réalisation avantageux du deuxième de mode réalisation du panneau objet de l'invention, les reliefs d'ondulation de la feuille ondulée sont interrompus au delà d'un périmètre, dit périmètre de pose, compris à l'intérieur des bords de la première plaque. Ainsi, le panneau comprend sur son pourtour une zone exempte d'ondulation ce qui réduit sa hauteur sur la structure de support du plancher.

Avantageusement, selon ce même mode de réalisation, l'épaisseur du panneau est constante dans l'espace compris entre le bord de la première plaque et le périmètre de pose. Cette caractéristique facilite la pose et le calage du panneau sur la structure support.

Avantageusement, le moyen de renfort est alors placé entre le périmètre de pose et le bord de la première plaque.

Quelque soit le mode de réalisation, la plaque, la feuille ondulée et le moyen de renfort sont constitués de matériaux comprenant une matrice thermoplastique. Ainsi un assemblage efficace de l'ensemble peut être réalisé notamment par soudage. Ces matériaux présentent par ailleurs une résistance accrue aux impacts et au matage en comparaison des résines thermodurcissables communément utilisées pour ces applications, propriétés avantageuses vis-à-vis du dimensionnement.

Avantageusement, la plaque, la feuille ondulée et le moyen de renfort sont constitués de matériaux comprenant une matrice en polyétheréthercétone. Cette constitution assure en plus une excellente tenue au feu et à la température, propriétés recherchées notamment pour les applications aéronautiques.

Selon une caractéristique avantageuse du premier mode de réalisation du panneau objet de l'invention, celui-ci comprend un cadre de fermeture sur le pourtour dudit panneau. Ce cadre de fermeture évite que l'humidité ne pénètre dans les espaces creux compris entre la face inférieure de la plaque et les parois intérieures des reliefs de la feuille ondulée.

Le panneau objet de l'invention est adaptable à la couverture de tout type de structure de support en treillis, plane ou de forme plus complexe, le panneau objet de l'invention pouvant être mis en forme avant ou après l'assemblage de la plaque et de la feuille ondulée.

Plus particulièrement, l'invention concerne également un plancher, notamment pour un aéronef, lequel plancher comprend une structure de support et un panneau selon l'un quelconque des modes de réalisation précédent fixé sur ladite structure support. Un tel plancher présente une masse et un coût de fabrication réduits en regard des solutions connues de l'art antérieur. Le panneau objet de l'invention peut être utilisé pour couvrir toute ou partie de la surface du plancher. Par exemple dans le cas d'un aéronef, des panneaux de plancher selon l'art antérieur, de type sandwich, peuvent être utilisés dans les partie situées sous les sièges des passagers, et des panneaux selon un des modes de réalisation de l'invention utilisés dans des zones supportant des charge plus importantes, par exemple dans les zones de roulage des cantines.

Selon un premier mode de réalisation, le dit plancher comprend un panneau selon le deuxième mode de réalisation du panneau objet de l'invention, lequel panneau est fixé à la structure de support par la zone comprise entre le périmètre de pose et le bord de la première plaque. Ce mode de réalisation permet de réduire la hauteur du plancher et par suite de gagner en habitabilité du volume délimité par ledit plancher.

Selon un deuxième mode de réalisation, ledit plancher comprend un panneau selon le premier mode de réalisation du panneau objet de l'invention et fixé à la structure support par des fixations traversant les inserts. Ce mode de réalisation est plus particulièrement adapté au remplacement d'un panneau de plancher de l'art antérieur par un panneau de plancher objet de l'invention

L'invention concerne également un aéronef comportant un plancher selon l'un des modes de réalisation précédent. La surface de plancher dans un aéronef peut atteindre plusieurs centaines de mètres carrés. Ainsi, le gain de masse procuré par chaque panneau objet de l'invention procure, par cumul, un gain considérable qui se répercute favorablement sur la consommation en carburant dudit aéronef.

L'invention concerne finalement un procédé particulièrement économique pour la fabrication d'un panneau objet de l'invention selon l'une de ses modes de réalisation mettant en oeuvre des éléments constitués de matériaux comportant une matrice thermoplastique, lequel procédé comprend les étape consistant à :
i. estamper à chaud une plaque préconsolidée pour constituer la feuille ondulée ;
ii. souder la feuille ondulée sur la première plaque ;
iii. assembler les moyens de renforts avec l'ensemble ainsi constitué.

L'utilisation de l'estampage à chaud permet de réaliser la feuille ondulée à partir d'une plaque renforcée par des fibres continues selon un mode de production adapté à la grande série. L'utilisation de la soudure assure une excellente cohésion de l'interface d'assemblage entre la feuille ondulée et la première plaque.

Avantageusement, l'étape de soudure est réalisée par une mise en pression globale à chaud de la feuille ondulée, des noyaux extractibles étant insérés entre la feuille ondulée et la première plaque à l'intérieur des reliefs de ladite feuille ondulée. Ainsi, la soudure peut être réalisée en une seule opération.

L'invention est exposée ci-après selon ses modes de réalisation préférés, nullement limitatifs, et en référence aux figures 1 à 10 dans lesquelles :
- la figure 1, relative à l'art antérieur, représente, figure 1A, un fuselage d'aéronef selon une coupe transversale, figure 1B, une vue en perspective et en bout d'un tronçon de fuselage et figure 1C, une vue de détail en section transversale de l'installation d'un plancher dans ledit fuselage ;
- la figure 2 représente en perspective et en vue de dessus deux des éléments d'un panneau selon l'invention à savoir la première plaque et la feuille ondulée rapportée sur cette plaque ;
- la figure 3 est une vue en perspective et de face selon une extrémité longitudinal d'un panneau selon un exemple de réalisation correspondant au premier mode de réalisation de l'invention ;
- la figure 4, montre en perspective et de face des exemples de réalisation d'inserts adaptés comme moyens de renfort local d'un panneau selon le premier mode de réalisation de l'invention ;
- la figure 5 représente un éclaté de l'assemblage d'un panneau selon un exemple du premier mode de réalisation de l'invention ;
- la figure 6 est une vue en section selon le plan AA défini figure 5 de l'extrémité transversale d'un panneau selon un exemple du premier mode de réalisation de l'invention ;
- la figure 7 est une vue en perspective et en éclaté de l'assemblage d'un panneau selon un exemple du deuxième mode de réalisation de l'invention ;
- la figure 8, montre en coupe selon le plan BB défini figure 7, l'extrémité transversale d'un panneau selon un exemple du deuxième mode de réalisation de l'invention ;
- la figure 9, présente, en section, deux exemples d'assemblage de panneaux selon des exemples de réalisation de l'invention avec une structure de support d'un plancher, figure 9A selon le premier mode de réalisation de l'invention , figure 9B selon le deuxième mode de réalisation de l'invention ;
- et la figure 10, représente un logigramme d'un exemple de réalisation du procédé objet de l'invention.

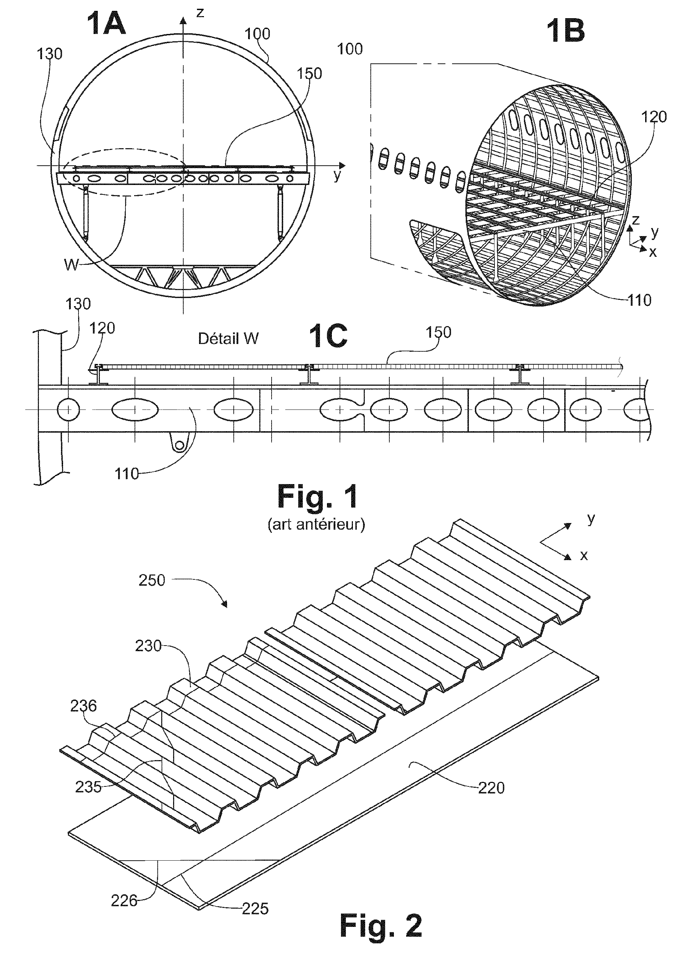

Sur l'ensemble des figures, la direction transversale est notée y, la direction longitudinale est notée x. Selon l'exemple de réalisation représenté figure 1, les axes longitudinaux et transversaux correspondent aux axes longitudinaux et transversaux du fuselage, cet exemple n'est nullement limitatif et l'homme du métier adaptera l'orientation du panneau selon les charges auquel celui-ci est soumis en service de sorte à obtenir la rigidité désirée.

Figure 1B, selon un exemple de réalisation d'un plancher pour un aéronef, celui-ci comprend une structure de support, comprenant des traverses (110) s'étendant transversalement dans le fuselage (100) dudit aéronef. Des rails (120) sont posés sur les traverses (110) et s'étendent longitudinalement dans le fuselage (100). Figure 1A, les traverses (110) sont fixées aux cadres (130) qui constituent l'ossature du fuselage. Figure 1C, les panneaux de plancher (150) sont posés sur les rails (120) et constituent le sol. Ainsi, les panneaux de plancher drainent les efforts appliqués au sol vers le fuselage (100) en passant par les rails (120) et les traverses (110). Lesdits panneaux de plancher (150) sont sollicités en flexion selon des couples parallèles aux axes longitudinaux (x) et transversaux (y) qui tendent à déformer lesdits panneaux de plancher par une flèche selon l'axe vertical (z). Selon l'art antérieur les panneaux de plancher (150) sont constitués de panneaux sandwich comprenant deux peaux séparées par une âme en nid d'abeille.

Figure 2, selon un exemple de réalisation du panneau de plancher objet de l'invention, celui-ci comprend une plaque (220) constituée d'un matériau composite renforcé par des fibres (225, 226) continues, c'est-à-dire que lesdites fibres s'étendent s'un bord à un autre bord de ladite plaque (220). Le panneau est rigidifié vis-à-vis des sollicitations de flexion par l'adjonction d'une feuille ondulée (230) également constituée d'un matériau composite renforcé par des fibres (235, 236) continues. Ladite feuille ondulée (230) est rapportée sur la plaque par collage, soudage ou co-cuisson selon la nature des matériaux en présence. La feuille ondulée (230) comprend une alternance d'ondes s'étendant dans une section transversale de part et d'autre d'un plan moyen selon un profil d'onde sensiblement en forme d'Ω (lettre grecque oméga), profil qui, une fois la feuille ondulée (230) rapportée sur la plaque (220), crée des raidisseurs s'étendant longitudinalement. Selon un exemple de réalisation avantageux, la plaque (220) et la feuille ondulée (230) sont constitués d'un composite stratifié obtenu à partir de plis unidirectionnels APC-2/AS4, comprenant 66 % de fibres de carbone, pré-imprégnés d'une résine thermoplastique en polyétheréthercétone, ou PEEK. La plaque (220) comprend 6 plis, orientés selon la séquence 0/90/45/-45/90/0 et une épaisseur après compactage de 0,828 mm. La feuille ondulée (230) est constituée du même matériau et d'un empilage de 8 plis selon la séquence 0/90/-45/45/- 45/45/90/0, pour une épaisseur de 1,1 mm après compactage. La direction à 0 ° correspondant à la direction transversale (y). Ce matériau présente une grande rigidité et une résistance mécanique élevée compte tenu du taux de fibres. La résine PEEK est par ailleurs particulièrement résistante vis-à-vis des impacts et présente une tenue au feu adaptée aux applications les plus exigeantes, notamment les applications aéronautiques.

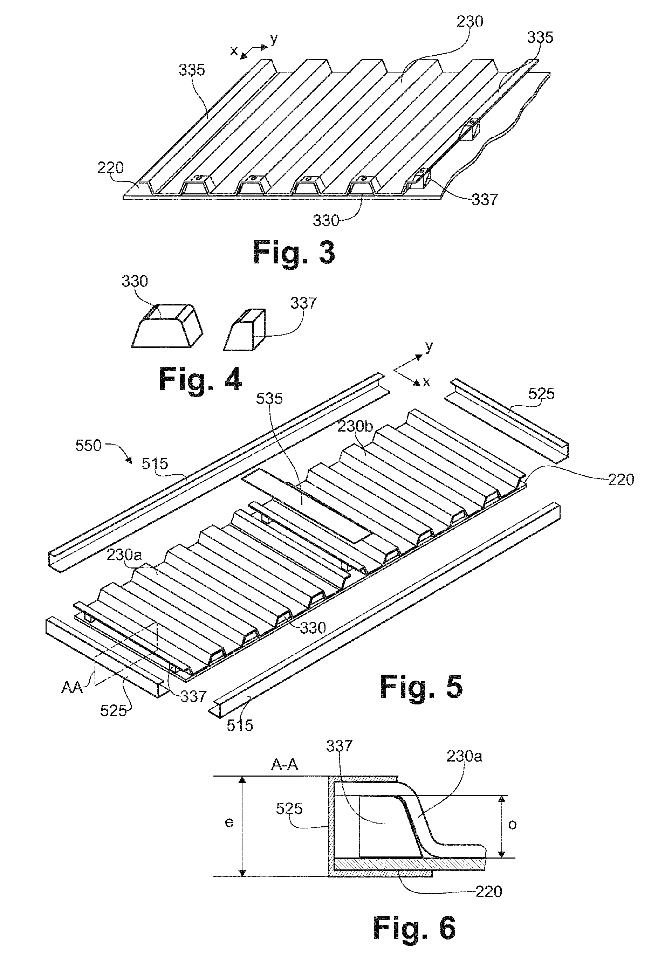

Figure 3, selon un premier mode de réalisation du panneau de plancher objet de l'invention, la feuille ondulée (230) recouvre l'intégralité de la surface de la plaque (220). Pour faciliter la pose dudit panneau, la feuille ondulée (230) se termine aux extrémités transversales du panneau par des demi-ondes (335) en relief par rapport à la plaque (220). Le panneau de plancher ainsi obtenu, repose et est fixé sur la structure de support par ses bords. Compte tenu du profil en demi-onde (335) terminant les extrémités transversales de la feuille ondulée (230) l'épaisseur de celle-ci est constante sur tout son périmètre. Afin de permettre cette fixation, des inserts (330, 337) sont placés entre la plaque (220) et la feuille ondulée (230) à l'intérieur des profils d'onde dans les zones recevant des fixations. Les perçages aptes à recevoir les fixations sont alors réalisés au niveau de ces inserts.

Figure 4, deux types d'inserts sont utilisés. Les inserts complets (330) sont de section sensiblement trapézoïdale, complémentaire à la forme intérieure d'un profil d'onde de la feuille ondulée. Les demi-inserts (337) sont intégrés aux extrémités transversales du panneau dans les profils (335) en demi-onde de la feuille ondulée. Les inserts (330, 337) sont avantageusement liés avec le panneau par soudage, collage ou co-cuisson selon la nature des matériaux en présence. Selon l'exemple de réalisation précédent, où le panneau de plancher est constitué d'un composite PEEK APC-2/AS4, lesdits inserts (300, 337) sont avantageusement constitués d'une résine polyétheréthercétone chargée de fibres courtes de renfort et sont obtenus par injection ou par extrusion.

Figure 5, selon un exemple de réalisation d'un panneau de plancher (550) objet du premier mode de réalisation de l'invention, deux feuilles ondulées (230a, 230b) juxtaposées transversalement sont assemblées avec une plaque (220). Ainsi, au niveau de la moitié transversale dudit panneau, deux terminaisons en demi-onde desdites feuilles ondulées (230a, 230b) sont en vis-à-vis. Avantageusement, le panneau de plancher est fixé sur des rails de la structure de support ou sur une structure de support en grille sur toute sa périphérie et dans cette zone centrale. Après assemblage des inserts (330) dans les profils d'onde aux extrémités longitudinales du panneau et des demis-inserts aux extrémités transversales des feuilles ondulées (230a, 230b), des profils de fermeture (515, 525) sont collés sur tout le périmètre du panneau, constituant un cadre de fermeture. Des profils (535) de fermeture sont également collés sur la partie centrale de celui-i. Les profils de fermeture (515) pour les extrémités longitudinales et les profils de fermeture (525) pour les extrémités transversales sont de section sensiblement en forme d'U et s'étendent sur toute la longueur de l'extrémité du panneau. Le profil (535) de fermeture de la partie centrale est une simple feuille venant recouvrir l'espace entre les extrémités des deux feuilles ondulées (230a, 230b). Selon un exemple de réalisation ces profils (515, 525, 535) de fermeture sont constitués d'une composite comportant une matrice polyétheréthercétone renforcée par deux plis de fibres de verre, pour une épaisseur de 0,4 mm. Ces profils de fermeture complètent l'obturation des profils d'onde, déjà partiellement réalisée par les inserts (330) et notamment aux extrémités transversales du panneau de plancher. Ainsi, ils évitent que de l'humidité, notamment de condensation, ou des fluides ne s'introduisent dans ces profils d'onde et ne conduisent à une augmentation de la masse.

Figure 6, avantageusement, la hauteur d'onde (o) est déterminée par des contraintes de rigidité mais également afin que l'épaisseur du panneau fini soit sensiblement équivalente à celle d'un panneau à âme en nid d'abeille selon l'art antérieur. Ainsi, le panneau de plancher objet de l'invention peut facilement être monté en lieu et place d'un panneau de plancher selon l'art antérieur.

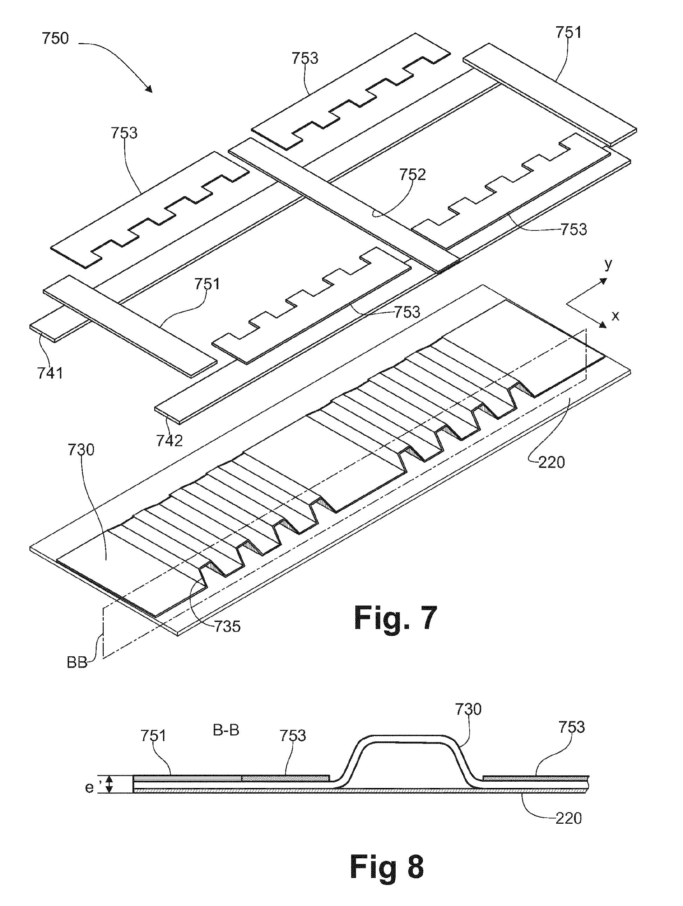

Figure 7, selon un deuxième mode de réalisation d'un panneau (750) de plancher objet de l'invention, celui-ci comprend une première plaque (220) sur laquelle est rapportée un feuille ondulée (730) qui en recouvre toute la surface transversalement, mais partiellement selon la direction longitudinale. Ladite feuille ondulée (730) ne comprend pas d'ondulation sur une largeur en ses extrémités transversales et éventuellement en partie centrale. Deux cales (741, 742) sont assemblées avec la plaque (220) sur les zones d'extrémités longitudinales non recouvertes par la feuille ondulée (730). Avantageusement ces cales (741, 742) sont d'une épaisseur équivalente à l'épaisseur de la feuille ondulée. Ainsi, à la surface du panneau, il existe un périmètre, dit périmètre de pose, tel que entre ce périmètre et les bords du panneau aucun relief d'ondulation n'est présent. Après assemblage des cales (741, 742) l'épaisseur du panneau est constante au delà de ce périmètre constituant ainsi un plan de pose. Avantageusement, extrémités (735) des profils d'onde de la feuille ondulée (730) sont détourés en biseau de sorte qu'il ne gênent pas la pose du panneau sur la structure de support. Des moyens de renfort (751, 752, 753) sous forme de plaques détourés sont assemblés par collage, soudage ou co-cuisson avec le panneau sur la zone de pose comprise entre le périmètre de pose et les bords dudit panneau. Selon un exemple de réalisation, lesdits moyens de renforts comprennent deux plaques d'extrémité (751) placées aux extrémités transversales du panneau, une plaque centrale (752) s'étendant dans la zone centrale où la feuille ondulée (730) est dépourvue d'ondulations et quatre plaques à doigts (753) qui prennent place sur les extrémités longitudinales du panneau entre les plaques d'extrémité (751) et la plaque centrale (752). Les plaques à doigts (753) sont détourées selon un profil crénelé, chaque créneau entourant une extrémité d'un profil d'onde en relief de la feuille ondulée (730). Elles permettent ainsi un transfert efficace des couples de flexion transversaux des zones de pose aux extrémités longitudinales vers la feuille ondulée (730). Selon un exemple de réalisation, les cales (741, 742) sont constituée d'un composite PEEK APC-2/AS4 comprennant 8 plis, les moyens de renfort sont obtenus à partir de plaque PEEK APC-2/AS4 comprenant 6 plis.

Figure 8, la zone de pose est plane et d'épaisseur constante. Selon l'exemple de réalisation précédent, cette zone de pose comprend un empilage total de 20 plis pour une épaisseur totale (e') de 2,75 mm.

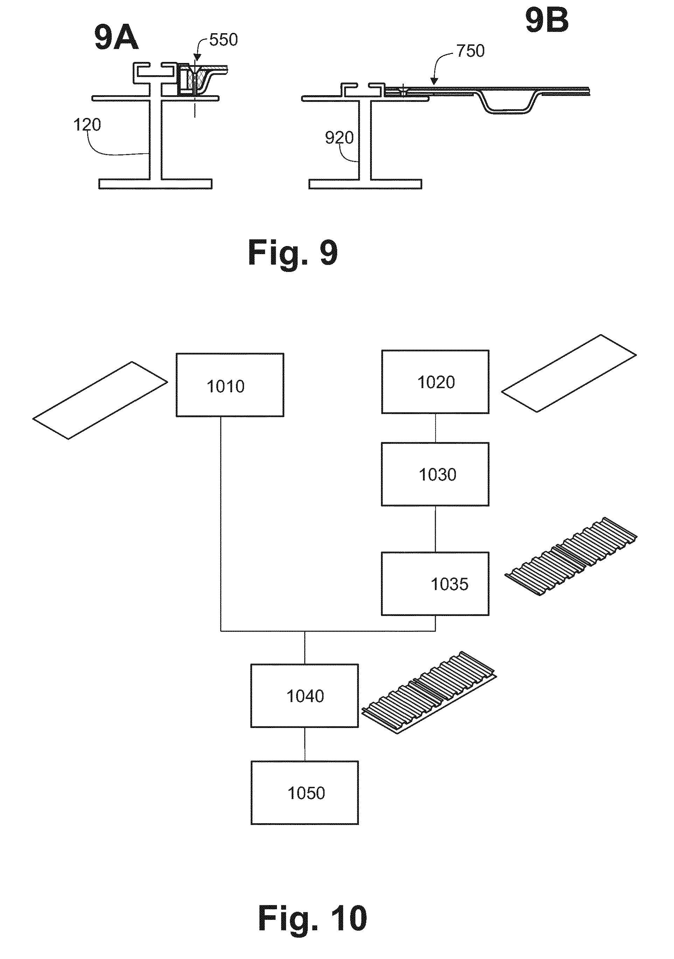

Figure 9, si le premier mode de réalisation du panneau (550) de plancher selon l'invention permet de remplacer avantageusement les panneaux de l'art antérieur en conservant les rails (120) de la structure de support existante, le deuxième mode de réalisation du panneau (750) selon l'invention permet, du fait de l'interface de pose de hauteur réduite, d'utiliser des rails (920) de hauteur réduite et ainsi de réduire la masse desdits rails.

Figure 10, selon un exemple de réalisation du procédé de fabrication du panneau objet l'invention, celui-ci comprend deux premières étapes de préparation-détourage de plaques en composite consolidées. Une étape de préparation (1010) est destinée à la réalisation de la première plaque (220). Une autre étape de préparation (1020), menée parallèlement à la première consiste à la réalisation et au détourage d'une plaque consolidée destinée à la réalisation de la feuille ondulée (230, 730). Ces plaques sont obtenues préférentiellement par drapage et consolidation de plis de fibres de carbone imprégnés d'une résine thermoplastique telle que du polyétheréthercétone. Au cours d'un étape d'estampage (1030) la plaque obtenue lors de l'étape précédente (1020) est formée par un estampage entre un poinçon et une matrice après chauffage de ladite plaque à une température proche de la température de fusion de la résine thermoplastique. À cette température de fusion de la résine, les fibres continues de renfort peuvent glisser les unes par rapport aux autres, pour obtenir la forme désirée. Quelque soit le mode de réalisation considéré, le profil de la feuille ondulée est développable. Ainsi, l'estampage ne pose pas de difficulté particulière dès lors qu'une température uniforme est assurée sur toute la surface du flan. Alternativement, la feuille ondulée peut également être obtenue par drapage consolidation en cote finie. Après l'estampage, une étape (1035) intermédiaire consiste à détourer la feuille ondulée de sorte à supprimer les bords faiblement compactés de celle-ci et sur lesquels le glissement relatif des plis est visible. Au cours de cette même étape(1035) intermédiaire, les extrémités (735) des profils d'onde sont également détourés. Un tel détourage est réalisé à l'aide d'un jet d'eau haute pression à jet abrasif ou à l'outil coupant. Au cours d'une étape d'assemblage (1040) la première plaque et la feuille ondulée sont assemblées. Dans le cas où ces deux éléments sont constitués d'un composite à matrice thermoplastique, cet assemblage est avantageusement réalisé par soudage. Ce soudage est obtenu en portant la plaque et la feuille ondulée à une température proche de la température de fusion de la résine et en leur appliquant une pression tendant à les plaquer l'une contre l'autre. Cette opération peut être réalisée en autoclave ou sur un outillage autonome. Des noyaux extractibles sont avantageusement introduits à l'intérieur des profils d'onde de la feuille ondulée pour éviter que ceux-ci ne s'effondrent sous l'effet de la pression appliquée. Alternativement le soudage peut être réalisé par des moyens de soudage en continu, consistant à chauffer localement les zone assemblées par un générateur de température adéquat tel qu'un laser, une sonotrode, une résistance ou un inducteur, et à déplacer ledit générateur selon des lignes de soudure appropriées. Ce mode d'assemblage, par soudage continu est plus flexible mais moins productif que le précédent. Après l'assemblage de la première plaque et de la feuille ondulée, les moyens de renforts sont assemblés au cours d'une étape de finition (1050), selon les méthodes exposées ci-avant. Avantageusement les profils de fermeture sont, selon le mode de réalisation, intégrés lors de cette étape de finition. Le panneau peut alors être parachevé par la réalisation de perçages adaptés à sa fixation à la structure de support, un détourage et un ébavurage finaux pour le mettre aux dimensions exactes, ou des opérations de dérochage pour faciliter l'accrochage de revêtement sur ledit panneau. Ainsi, la réalisation de du panneau objet de l'invention repose sur une combinaison originale de procédés éprouvés dont l'assurance qualité repose sur des paramètres de mise en oeuvre facilement mesurables en cours de processus. Notamment, le procédé d'assemblage par mise en pression et soudage, garantie la cohésion de l'ensemble et le couplage mécanique effectif entre la première plaque et la feuille ondulée qui en assure la rigidité, y compris pour une grande surface d'adhésion entre la feuille ondulée et ladite première plaque.

Selon l'art antérieur, le poids d'un panneau de plancher avec âme en nid d'abeille en alliage d'aluminium proposé commercialement par la société TEKLAM Corp., 1121 Olympic Corona, California 92881, Etats Unis d'Amérique, est de l'ordre de 4,42 kg.m⁻² pour une épaisseur de 10 mm (0,4"). Pour cette même épaisseur un panneau de plancher avec âme en nid d'abeille en NOMEX® la masse surfacique est de 3,8 kg.m⁻². Un panneau de plancher selon l'invention présente une masse surfacique de 3,65 kg.m⁻² pour des caractéristiques mécanique et d'usage au moins équivalentes.

La description ci-avant et les exemples de réalisation montrent que l'invention atteint les objectifs visés en particulier elle permet la réalisation de panneaux autoraidis, adaptés notamment à la réalisation d'un plancher d'aéronef, plus légers et plus économiques que les panneaux connus de l'art antérieur pour des applications similaires.

## Revendications

1. Panneau (250, 550, 750), notamment pour un plancher d'aéronef, **caractérisé en ce qu'**il comprend :
a. une première plaque (220) constituée d'un matériau composite renforcé par des fibres continues (225, 226) ;
b. une feuille ondulée (230, 230a, 230b, 730) constituée d'un matériau composite renforcé par des fibres continues (235, 236), liée à une face, dite inférieure, de la première plaque (220) ;
c. un moyen de renfort local (330, 337, 751, 753, 752) lié à la feuille ondulée (230, 230a, 230b, 730).

2. Panneau (550) selon la revendication 1, **caractérisé en ce que** le moyen de renfort local est constitué d'un insert (330, 335) placé dans l'espace compris entre la face inférieure de la première plaque (220) et les parois internes d'un relief de la feuille ondulée (230a, 230b).

3. Panneau (750) selon la revendication 1, **caractérisé en ce que** le moyen de renfort local comprend une plaque (751, 752, 753) constituée d'un matériau composite renforcé par des fibres continues.

4. Panneau (750) selon la revendication 3, **caractérisé en ce que** les reliefs d'ondulation de la feuille ondulée (730) sont interrompus au-delà d'un périmètre, dit périmètre de pose, compris à l'intérieur des bords de la première plaque.

5. Panneau (750) selon la revendication 4, **caractérisé en ce que** l'épaisseur du panneau est constante dans l'espace compris entre le bord de la première plaque (220) et le périmètre de pose.

6. Panneau (750) selon la revendication 5, **caractérisé en ce que** le moyen de renfort (751, 752, 753) est placé entre le périmètre de pose et le bord de la première plaque (220).

7. Panneau (250, 750, 550) selon la revendication 1, **caractérisé en ce que** la plaque (220), la feuille ondulée (230, 230a, 230b, 730) et le moyen de renfort sont constitués de matériaux comprenant une matrice thermoplastique.

8. Panneau selon la revendication 7, **caractérisé en ce que** la plaque (220), la feuille ondulée (230, 730, 230a, 230b) et le moyen de renfort (751, 752, 753, 330, 337) sont constitués de matériaux comprenant une matrice en polyétheréthercétone.

9. Panneau selon la revendication 2, **caractérisé en ce qu'**il comprend un cadre constitué de profils (515, 525, 535) de fermeture sur le pourtour dudit panneau.

10. Plancher, notamment pour un aéronef, **caractérisé en ce qu'**il comprend une structure de support (110, 220) et un panneau selon la revendication 1, fixé sur ladite structure support.

11. Plancher selon la revendication 10, **caractérisé en ce qu'**il comprend un panneau selon la revendication 6, fixé à la structure de support par la zone comprise entre le périmètre de pose et le bord de la première plaque (220).

12. Plancher selon la revendication 10, **caractérisé en ce qu'**il comprend un panneau selon la revendication 9, fixé à la structure support par des fixations traversant les inserts (330, 337).

13. Aéronef **caractérisé en ce qu'**il comprend un plancher selon l'une quelconque des revendications 10 à 12.

14. Procédé pour la fabrication d'un panneau selon la revendication 7, **caractérisé en ce qu'**il comprend les étape consistant à :
i. estamper (1020) à chaud une plaque préconsolidée pour constituer la feuille ondulée ;
ii. souder (1040) ladite feuille ondulée sur la première plaque ;
iii. assembler (1050) les moyens de renforts avec l'ensemble ainsi constitué.

15. Procédé selon la revendication 14, **caractérisé en ce que** l'étape de soudure (1040) est réalisée par une mise en pression globale à chaud de la feuille ondulée, des noyaux extractibles étant insérés entre la feuille ondulée et la première plaque à l'intérieur des reliefs de ladite feuille ondulée.

## Patentansprüche

1. Platte (250, 550, 750), insbesondere für einen Flugzeugboden, **dadurch gekennzeichnet, dass** sie umfasst:
i. eine erste Platte (220), bestehend aus einem durch Endlosfasern (225, 226) verstärkten Verbundstoff;
ii. einen gewellten Bogen (230, 230a, 230b, 730), bestehend aus einem durch Endlosfasern (235, 236) verstärkten Verbundstoff, der mit einer sogenannten unteren Seite der ersten Platte (220) verbunden ist;
iii. ein Mittel zur lokalen Verstärkung (330, 337, 751, 753, 752), das mit dem gewellten Bogen (230, 230a, 230b, 730) verbunden ist.

2. Platte (550) nach Anspruch 1, **dadurch gekennzeichnet, dass** das Mittel zur lokalen Verstärkung aus einer Einlage (330, 335) besteht, die in dem Raum zwischen der Unterseite der ersten Platte (220) und den Innenwänden eines Reliefs des gewellten Bogens (230a, 230b) angeordnet ist.

3. Platte (750) nach Anspruch 1, **dadurch gekennzeichnet, dass** das Mittel zur lokalen Verstärkung eine Platte (751, 752, 753) umfasst, die aus einem durch Endlosfasern verstärkten Verbundstoff besteht.

4. Platte (750) nach Anspruch 3, **dadurch gekennzeichnet, dass** die Wellenreliefs des gewellten Bogens (730) über einen als Einbauumfang bezeichneten Umfang hinaus, der innerhalb der Ränder der ersten Platte liegt, unterbrochen sind.

5. Platte (750) nach Anspruch 4, **dadurch gekennzeichnet, dass** die Stärke der Platte in dem zwischen dem Rand der ersten Platte (220) und dem Einbauumfang liegenden Raum konstant ist.

6. Platte (750) nach Anspruch 5, **dadurch gekennzeichnet, dass** das Mittel zur Verstärkung (751, 752, 753) zwischen dem Einbauumfang und dem Rand der ersten Platte (220) angeordnet ist.

7. Platte (250, 750, 550) nach Anspruch 1, **dadurch gekennzeichnet, dass** die Platte (220), der gewellte Bogen (230, 230a, 230b, 730) und das Mittel zur Verstärkung aus Materialien bestehen, die einen Thermoplastkern umfassen.

8. Platte nach Anspruch 7, **dadurch gekennzeichnet, dass** die Platte (220), der gewellte Bogen (230, 730, 230a, 230b) und das Mittel zur Verstärkung (751, 752, 753, 330, 337) aus Materialien bestehen, die einen Polyetheretherketonkern umfassen.

9. Platte nach Anspruch 2, **dadurch gekennzeichnet, dass** sie einen aus Schließprofilen (515, 525, 535) bestehenden, um die Außenlinie der Platte verlaufenden Rahmen umfasst.

10. Boden, insbesondere für ein Flugzeug, **dadurch gekennzeichnet, dass** er eine Stützstruktur (110, 220) und eine Platte nach Anspruch 1 umfasst, die auf dieser Stützstruktur befestigt ist.

11. Boden nach Anspruch 10, **dadurch gekennzeichnet, dass** er eine Platte nach Anspruch 6 umfasst, die über den Bereich, der zwischen dem Einbauumfang und dem Rand der ersten Platte (220) liegt, auf der Stützstruktur befestigt ist.

12. Boden nach Anspruch 10, **dadurch gekennzeichnet, dass** er eine Platte nach Anspruch 9 umfasst, die durch die Einlagen (330, 337) durchquerende Fixierungen auf der Stützstruktur befestigt ist.

13. Flugzeug, **dadurch gekennzeichnet, dass** es einen Boden nach einem der Ansprüche 10 bis 12 umfasst.

14. Verfahren für die Fertigung einer Platte nach Anspruch 7, **dadurch gekennzeichnet, dass** es folgende Arbeitsschritte umfasst:
i. Warmformen (1020) einer vorgefestigten Platte, um den gewellten Bogen zu bilden;
ii. den gewellten Bogen auf die erste Platte schweißen (1040);
iii. die Verstärkungsmittel mit der so gebildeten Einheit verbinden (1050).

15. Verfahren nach Anspruch 14, **dadurch gekennzeichnet, dass** das Schweißen (1040) unter allgemeiner Druckbeaufschlagung bei Hitze des gewellten Bogens realisiert wird, wobei zwischen dem gewellten Bogen und der Platte innerhalb der Reliefs des gewellten Bogens extrahierbare Kerne eingesetzt werden.

## Claims

1. A panel (250, 550, 750), particularly for an aircraft floor, **characterized in that** it comprises:
i. a first plate (220) made of composite material reinforced by continuous fibers (225, 226);
ii. a corrugated sheet (230, 230a, 230b, 730) made of composite material reinforced by continuous fibers (235, 236), joined to a side, known as the underside, of the first plate (220);
iii. local reinforcing means (330, 337, 751, 753, 752) joined to the corrugated sheet (230, 230a, 230b, 730).

2. The panel (550) according to claim 1, **characterized in that** the local reinforcing means is made up of an insert (330, 335) placed in the space between the underside of the first plate (220) and the internal walls of a ridge of the corrugated sheet (230a, 230b).

3. The panel (750) according to claim 1, **characterized in that** the local reinforcing means comprises a plate (751, 752, 753) made of composite material reinforced by continuous fibers.

4. The panel (750) according to claim 3, **characterized in that** the corrugation ridges of the corrugated sheet (730) are interrupted beyond a perimeter known as the fitting perimeter, lying within the edges of the first plate.

5. The panel (750) according to claim 4, **characterized in that** the thickness of the panel is constant in the space lying between the edge of the first plate (220) and the fitting perimeter.

6. The panel (750) according to claim 5, **characterized in that** the reinforcing means (751, 752, 753) is placed between the fitting perimeter and the edge of the first plate (220).

7. The panel (250, 750, 550) according to claim 1, **characterized in that** the plate (220), the corrugated sheet (230, 230a, 230b, 730) and the reinforcing means are made of materials that comprise a thermoplastic matrix.

8. The panel according to claim 7, **characterized in that** the plate (220), the corrugated sheet (230, 730, 230a, 230b) and the reinforcing means (751, 752, 753, 330, 337) are made of materials that comprise a polyetheretherketone matrix.

9. The panel according to claim 2, **characterized in that** it comprises a frame made of closing sections (515, 525, 535) on the perimeter of said panel.

10. A floor, particularly for an aircraft, **characterized in that** it comprises a supporting structure (110, 220) and a panel according to claim 1 fixed to said supporting structure.

11. The floor according to claim 10, **characterized in that** it comprises a panel according to claim 6 fastened to the supporting structure by the area lying between the fitting perimeter and the edge of the first plate (220).

12. The floor according to claim 10, **characterized in that** it comprises a panel according to claim 9 fastened to the supporting structure by fasteners that pass through the inserts (330, 337).

13. An aircraft **characterized in that** it comprises a floor according to any of claims 10 to 12.

14. A method for making a panel according to claim 7, **characterized in that** it comprises steps of:
i. hot stamping (1020) a pre-consolidated plate to make the corrugation sheet;
ii. welding (1040) the corrugated sheet to the first plate;
iii. assembling (1050) the reinforcing means with the resulting assembly.

15. The method according to claim 14, **characterized in that** the welding step (1040) is carried out by hot application of overall pressure on the corrugation sheet, wherein extractible cores are inserted between the corrugated sheet and the plate inside the ridges of said corrugated sheet.
